(19) Europäisches Patentamt
European Patent Office
Office européen des brevets

(11) Veröffentlichungsnummer: **0 022 521**
**B1**

(12) # EUROPÄISCHE PATENTSCHRIFT

(45) Veröffentlichungstag der Patentschrift: **15.09.82**

(51) Int. Cl.³: **C 09 B 11/14**

(21) Anmeldenummer: **80103764.9**

(22) Anmeldetag: **02.07.80**

(54) **Herstellung kationischer Triarylmethanfarbstoffe.**

(30) Priorität: **13.07.79 DE 2928466**

(43) Veröffentlichungstag der Anmeldung: **21.01.81 Patentblatt 81/3**

(45) Bekanntmachung des Hinweises auf die Patenterteilung: **15.09.82 Patentblatt 82/37**

(84) Benannte Vertragsstaaten: **BE CH DE FR GB IT LI**

(56) Entgegenhaltungen:
**EP-A-0 012 283**
**DE-A-2 736 679**
**DE-C-219 417**
**DE-C-231 992**

**Die Akte enthält technische Angaben, die nach dem Eingang der Anmeldung eingereicht wurden und die nicht in dieser Patentschrift enthalten sind.**

(73) Patentinhaber: **BAYER AG, Zentralbereich Patente, Marken und Lizenzen, D-5090 Leverkusen 1, Bayerwerk (DE)**

(72) Erfinder: **Hermann, Karl Heinz, Dr., Theodor-Storm-Strasse 4, D-5090 Leverkusen 1 (DE)**

**EP 0 022 521 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Herstellung kationischer Triarylmethanfarbstoffe

Die Erfindung betrifft ein Eintopfverfahren zur Synthese von Triarylmethanfarbstoffen der allgemeinen Formel

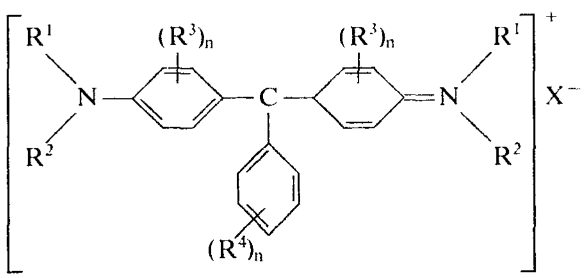

(I)

in der

| | |
|---|---|
| $R^1$ und $R^2$ | für gegebenenfalls substituiertes Alkyl, Aryl oder Aralkyl stehen oder zusammen oder mit der ortho-Position des Phenylringes einen heterocyclischen Ring bilden und |
| $R^1$ | zusätzlich für Wasserstoff stehen kann, |
| $R^3$ und $R^4$ | Wasserstoff oder nichtionogene Substituenten bedeuten, |
| n | für eine ganze Zahl von 1 bis 4 steht und |
| $X^-$ | ein Anion bedeutet, |

dadurch gekennzeichnet, daß man einen Aldehyd der allgemeinen Formel

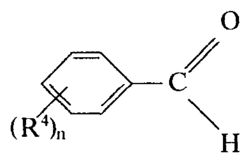

(II)

in der $R^4$ und n die obengenannte Bedeutung haben, mit aromatischen Aminen der allgemeinen Formel

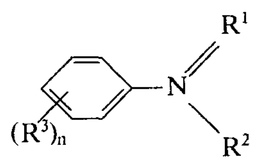

(III)

in der $R^1$, $R^2$, $R^3$ und n die oben genannte Bedeutung haben, gegebenenfalls in Gegenwart von Harnstoff kondensiert und das so erhaltene Reaktionsgemisch mit Sauerstoff in Gegenwart katalytischer Mengen von durch Halogen oder Cyan substituierten Benzochinonen oder durch Nitro substituierten Phenanthrenchinonen und in Gegenwart katalytischer Mengen von Stickstoffoxiden — ausgenommen Distickstoffmonoxid — oder von Substanzen, die unter den Reaktionsbedingungen solche Stickstoffoxide erzeugen, oxidiert.

In den Formeln sind unter Alkylresten insbesondere $C_1$- bis $C_4$-Alkylreste zu verstehen. Die Alkylreste tragen beispielsweise 1 bis 3 nichtionische Substituenten. Als solche sind Halogen, Hydroxy, $C_1$- bis $C_4$-Alkyl, Cyan, $C_1$- bis $C_4$-Alkoxy, $C_1$- bis $C_4$-Alkoxycarbonyl, $C_1$- bis $C_3$-Alkylcarbonyloxy oder Aminocarbonyl zu nennen.

Geeignete Arylreste sind insbesondere ein gegebenenfalls substituierter Phenyl- oder Naphthylrest.

Geeignete Aralkylreste sind insbesondere ein gegebenenfalls substituierter Benzyl-, $\alpha$- oder $\beta$-Phenylethyl-, $\alpha$-, $\beta$- oder $\gamma$-Phenylpropylrest.

Diese Isocyclen können beispielsweise 1 bis 3 Substituenten, wie Halogen, $C_1$- bis $C_4$-Alkyl, $C_1$- bis $C_4$-Alkoxy, tragen.

Die Reste $R^1$ und $R^2$ bilden zusammen oder mit der o-Position des Phenylrings, z. B. 5- oder 6gliedrige Ringe; zusammen bilden sie beispielsweise einen Piperidin-, Pyrrolidin-, Morpholin- oder Piperazin-Ring; mit der ortho-Position bilden sie beispielsweise einen Tetrahydrochinolin-, Indolin-, Julolidin-, Phenmorpholin-, Tetrahydrochinoxalin- oder Carbazol-Ring.

Unter den oben beschriebenen Farbstoffen lassen sich besonders solche der allgemeinen Formel I gut darstellen, in der

$R^1$ und $R^2$ $C_1$- bis $C_4$-Alkyl, Hydroxyalkyl mit zwei und drei C-Atomen, Cyanethyl, Alkoxyalkyl mit insgesamt drei bis fünf C-Atomen, Alkoxycarbonylalkyl mit insgesamt drei bis acht C-Atomen, Alkylcarbonyloxyalkyl mit insgesamt drei bis acht C-Atomen, $C_1$- bis $C_4$-Halogenalkyl, Cyclohexyl, Benzyl oder Phenethyl bedeuten und
$R^1$ auch für Wasserstoff, Phenyl oder durch Halogen, $C_1$- bis $C_4$-Alkyl oder -Alkoxy substituiertes Phenyl stehen kann,
$R^3$ für Wasserstoff, $C_1$- bis $C_4$-Alkyl, $C_1$- bis $C_4$-Alkoxy, Chlor oder Brom steht,
$R^4$ Wasserstoff, Chlor, Brom, Hydroxy, $C_1$- bis $C_4$-Alkyl, $C_1$- bis $C_4$-Alkoxy, Nitro, Cyan, Mono-$C_1$- bis -$C_4$-alkylamino oder Di-$C_1$- bis -$C_4$-alkylamino bedeutet,
n die oben genannte Bedeutung hat.

Besonders bevorzugt sind solche Farbstoffe der allgemeinen Formel I, in der

$R^1$ und $R^2$ für Methyl, Ethyl, Propyl, Oxethyl oder Butyl,
$R^3$ für Wasserstoff, Methyl oder Ethyl,
$R^4$ für Wasserstoff, Chlor oder Methyl und
n für 1 stehen und
$X^-$ die oben angegebene Bedeutung hat.

Die Anionen leiten sich von anorganischen oder organischen Säuren ab und sind im allgemeinen durch das Herstellungsverfahren und die evtl. vorgenommene Reinigung des rohen Farbstoffes gegeben. Im allgemeinen liegen die Farbstoffe als Zinkchlorid-Doppelsalze, Acetate, Methosulfate, Ethosulfate oder als Halogenide (insbesondere als Chloride oder Bromide) vor. Die Anionen können in bekannter Weise gegen andere Anionen ausgetauscht werden.

Die als Oxidationsmittel eingesetzten Chinone können sein:
Tetrachlor-, Tetrabrom-, Tetrafluor-, Tetracyan-, Dicyandichlor-1,4-benzochinon,
Tetrachlor- oder Tetrabrom-1,2-benzochinon,
2-Nitro-, 2,7-Dinitro- oder 4,5-Dinitrophenanthrenchinon,
Bevorzugt werden Tetrachlor- oder Tetrabrom-1,4-benzochinon. Man setzt die Chinone in einer Menge von $10^{-3}$ bis $10^{-1}$ mol bezogen auf die Molmenge der Verbindung III, ein. Anstelle der Chinone können auch die entsprechenden Hydrochinone eingesetzt werden.

Geeignete Aldehyde sind:
Benzaldehyd, 2-, 3- oder 4-Chlor-benzaldehyd, 2-, 3- oder 4-Methyl-benzaldehyd,
2-, 3- oder 4-Nitro-benzaldehyd, 2-, 3- oder 4-Methoxy-benzaldehyd,
2-, 3- oder 4-Ethoxy-benzaldehyd, 2- oder 4-Hydroxy-benzaldehyd, 4-Dimethylamino-benzaldehyd, 4-Diethylamino-benzaldehyd, 4-Dipropylamino-benzaldehyd,
4-Cyan-benzaldehyd, 2,4-Dimethyl-benzaldehyd,
2,5-Dimethyl-benzaldehyd oder 3,4-Dimethoxy-benzaldehyd.

Geeignete Anilinderivate sind:
Monomethylanilin, Dimethylanilin, Monoethylanilin, Diethylanilin, Monopropylanilin,
Dipropylanilin, Bisoxethylanilin, Cyanethylanilin, Biscyanethylanilin,
Oxethylmethylanilin, N-Phenylpiperidin, N-Phenylmorpholin,
N-Methyl-2,2,4-trimethyltetrahydrochinolin, Dimethyl-m-toluidin, Diethyl-m-toluidin,
Bisoxethyl-m-toluidin, Monomethyl-o-toluidin,
Dimethyl-m-chloranilin oder Diethyl-m-chloranilin.

Geeignete Katalysatoren sind:
Stickstoffoxid oder Stickstoffdioxid oder Substanzen, die unter den Reaktionsbedingungen — vor allen Dingen in sauren Lösungsmitteln — Stickstoffoxide freisetzen, z. B. Eisen(III)-nitrat oder Natriumnitrit.

Die Katalysatoren werden in Konzentrationen von 1 bis 20 Molprozent, bezogen auf das Substrat, angewandt.

Man führt das Verfahren so durch, daß man die Reaktionskomponenten im Temperaturbereich zwischen 60 und 120°C in einem eine aliphatische Carbonsäure enthaltenden Reaktionsmedium — vorzugsweise Eisessig oder Propionsäure, die mit Wasser, ein- oder mehrwertigen Alkoholen oder Ethern vermischt sein können — kondensiert und anschließend das Reaktionsgemisch nach Zugabe von $10^{-3}$ bis $10^{-1}$ mol Chinon, bezogen auf die Molmenge der Verbindung II, im Temperaturbereich von 0–150°C, vorzugsweise von 20–70°C, intensiv mit zugeführtem Sauerstoff, normalerweise Reinsauerstoff oder Luft, vermischt und im Verlauf der Reaktion entweder 1 bis 20 Molprozent Nitrate oder Nitrite zugibt oder insgesamt 1 bis 20 Molprozent Stickstoffoxide zudosiert. Die Zudosierung kann entweder mit dem Sauerstoff oder aus einer separaten Dosiervorrichtung erfolgen. Um eine hohe Reaktionsgeschwindigkeit zu erreichen, ist eine intensive Durchmischung von Gas und Flüssigkeit notwendig. Das Arbeiten unter Druck ist auch möglich.

Aus der DE-A-2 736 679 ist ein Verfahren zur Herstellung von Triarylmethanfarbstoffen bekannt, das sich von dem neuen Verfahren dadurch unterscheidet, daß Schwermetallkomplexe anstelle der Stickstoffoxide als Katalysatoren verwendet werden. Überraschenderweise wurde nun gefunden, daß die katalytische Oxidation in Gegenwart der Stickstoffoxide in ausgezeichneter Ausbeute und Reinheit zu Triarylmethanfarbstoffen führt. Diese glatte Reaktion war aus der Kenntnis des aus der DE-C-219 417 bekannten Oxidationsverfahrens zur Herstellung von Triarylmethanfarbstoffen nicht vorhersehbar, da in dieser Patentschrift keine katalytische Oxidation, sondern vielmehr eine Oxidation mit Stickstoffoxiden beschrieben wird.

Die folgenden Beispiele veranschaulichen die Erfindung.

## Beispiel 1

72,6 g Dimethylanilin, 10 g Harnstoff und 31,8 g Benzaldehyd werden in 600 g Eisessig 5 h auf 100° C erhitzt. Danach wird die Reaktionsmischung abgekühlt, mit 6 g Chloranil versetzt und bei 30° C intensiv mit Luft behandelt. Im Verlauf der Reaktion — Reaktionsdauer etwa 12 h — werden gleichmäßig insgesamt 1,2 g eines Gemisches aus Stickstoffmonoxid und Stickstoffdioxid — erzeugt durch Behandeln von Natriumnitrit mit Schwefelsäure — zudosiert. Am Ende der Reaktion beträgt die photometrisch bestimmte Farbstoffausbeute 90% — bezogen auf die eingesetzte Aldehydmenge.

Der Farbstoff wird nach Abdampfen des Eisessigs mit Natronlauge behandelt und als Carbinolbase gefällt. Nach Erwärmen der Carbinolbase mit Oxalsäure auf 70° C und Filtration fällt beim Abkühlen sehr sauberes, kristallines Malachitgrünoxalat aus.

Ähnlich gute Ergebnisse erhält man, wenn man während der Luftoxidation anstelle der Stickstoffoxide gleichmäßig entweder 2,5 g Natriumnitrit oder 2,5 g Eisen(III)-nitrat zusetzt.

## Beispiel 2

72,6 g Dimethylanilin, 10 g Harnstoff und 42 g o-Chlor-benzaldehyd werden in 600 g Eisessig unter Stickstoff 5 h auf 100° C erwärmt. Danach wird die Reaktionslösung abgekühlt, mit 6 g Chloranil versetzt und bei 50° C kräftig mit Luft begast. Während der Reaktion werden kontinuierlich insgesamt 1,2 g eines Gemisches aus Stickstoffmonoxid und Stickstoffdioxid zudosiert. Nach vollendeter Reaktion wird ein Teil des Eisessigs im Vakuum abgedampft, der Rückstand in heißem $H_2O$ aufgenommen, mit verdünnter Salzsäure angesäuert, heiß filtriert und mit Natriumchlorid gefällt. Man erhält den Farbstoff in 80%iger Ausbeute.

Zu ähnlichen Ergebnissen gelangt man, wenn man als Katalysatoren anstelle der Stickstoffoxide Natriumnitrit oder Eisen(III)-nitrat verwendet.

## Beispiel 3

89,4 g Diethylanilin, 10 g Harnstoff und 31,8 g Benzaldehyd werden unter Stickstoff in 500 g Eisessig 6 h auf 100° C erwärmt. Nach Abkühlen auf 30° C werden 6 g Chloranil in die Reaktionslösung gegeben. Danach wird intensiv mit Luft begast. Im Verlauf der Reaktion werden insgesamt 1,2 g eines Gemisches aus Stickstoffmonoxid und Stickstoffdioxid zudosiert. Nach beendeter Reaktion enthält die Reaktionslösung Diamantgrün in 82% Ausbeute.

Nach dem erfindungsgemäßen Verfahren lassen sich durch Einsatz der folgenden Benzaldehyde und Anilinderivate ebenfalls Triphenylmethanfarbstoffe synthetisieren.

| Beispiel | Anilinderivat | | | Benzaldehyd |
|---|---|---|---|---|
| | 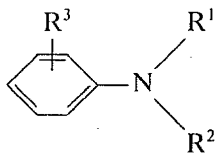 | | | 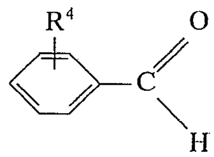 |
| | $R^1$ | $R^2$ | $R^3$ | $R^4$ |
| 4 | $C_2H_5$ | $C_2H_5$ | H | o-Cl |
| 5 | $C_2H_5$ | $C_2H_5$ | m-$CH_3$ | o-Cl |
| 6 | $C_2H_5$ | $C_2H_5$ | m-$CH_3$ | H |
| 7 | $CH_3$ | $CH_3$ | m-$CH_3$ | H |
| 8 | $CH_3$ | $CH_3$ | m-$CH_3$ | o-Cl |
| 9 | $CH_3$ | $CH_3$ | m-$CH_3$ | p-$CH_3$ |
| 10 | $CH_3$ | $CH_3$ | H | p-$CH_3$ |
| 11 | $CH_3$ | $CH_3$ | H | p-$OCH_3$ |
| 12 | $CH_3$ | $CH_3$ | m-$CH_3$ | p-$OCH_3$ |
| 13 | $CH_3$ | $C_2H_4CN$ | H | H |
| 14 | $CH_3$ | $C_2H_4CN$ | H | o-Cl |
| 15 | $CH_3$ | $CH_3$ | H | o-$NO_2$ |
| 16 | $CH_3$ | $C_2H_4OH$ | H | H |
| 17 | $CH_3$ | $C_2H_4OH$ | H | o-Cl |
| 18 | $CH_3$ | $C_2H_4OH$ | H | p-$CH_3$ |
| 19 | $-C_5H_{10}-$ | | H | H |

**Patentansprüche**

1. Eintopfverfahren zur Synthese von Triarylmethanfarbstoffen der allgemeinen Formel

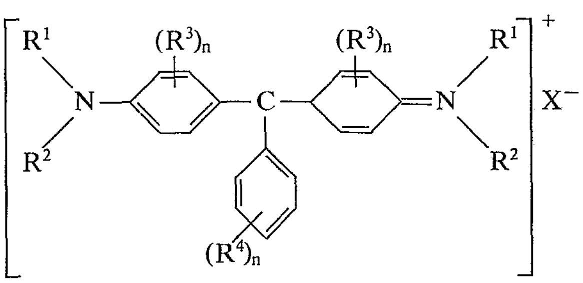

in der

$R^1$ und $R^2$ für gegebenenfalls substituiertes Alkyl, Aryl oder Aralkyl stehen oder zusammen oder mit der ortho-Position des Phenylringes einen heterocyclischen Ring bilden und
$R^1$ zusätzlich für Wasserstoff stehen kann,
$R^3$ und $R^4$ Wasserstoff oder nichtionogene Substituenten bedeuten,
n für eine ganze Zahl von 1 bis 4 steht und
$X^-$ ein Anion bedeutet,

dadurch gekennzeichnet, daß man einen Aldehyd der allgemeinen Formel

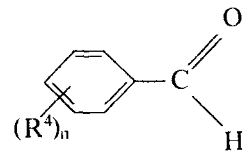

in der $R^4$ und n die obengenannte Bedeutung haben, mit aromatischen Aminen der allgemeinen Formel

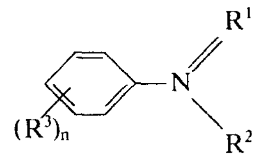

in der $R^1$, $R^2$, $R^3$ und n die oben genannte Bedeutung haben, gegebenenfalls in Gegenwart von Harnstoff kondensiert und das so erhaltene Reaktionsgemisch mit Sauerstoff in Gegenwart katalytischer Mengen von durch Halogen oder Cyan substituierten Benzochinonen oder durch Nitro substituierten Phenanthrenchinonen und in Gegenwart katalytischer Mengen von Stickstoffoxiden — ausgenommen Distickstoffmonoxid — oder von Substanzen, die unter den Reaktionsbedingungen solche Stickstoffoxide erzeugen, oxidiert.

2. Verfahren gemäß Anspruch 1, dadurch gekennzeichnet, daß man Verbindungen der im Anspruch 1 angegebenen allgemeinen Formel, in der

| | |
|---|---|
| $R^1$ und $R^2$ | $C_1$- bis $C_4$-Alkyl, Hydroxyalkyl mit zwei und drei C-Atomen, Cyanethyl, Alkoxyalkyl mit insgesamt drei bis fünf C-Atomen, Alkoxycarbonylalkyl mit insgesamt drei bis acht C-Atomen, Alkylcarbonyloxyalkyl mit insgesamt drei bis acht C-Atomen, $C_1$- bis $C_4$-Halogenalkyl, Cyclohexyl, Benzyl oder Phenethyl bedeuten und |
| $R^1$ | auch für Wasserstoff, Phenyl oder durch Halogen, $C_1$- bis $C_4$-Alkyl oder -Alkoxy substituiertes Phenyl stehen kann, |
| $R^3$ | für Wasserstoff, $C_1$- bis $C_4$-Alkyl, $C_1$- bis $C_4$-Alkoxy, Chlor oder Brom steht, |
| $R^4$ | Wasserstoff, Chlor, Brom, Hydroxy, $C_1$- bis $C_4$-Alkyl, $C_1$- bis $C_4$-Alkoxy, Nitro, Cyan, Mono-$C_1$- bis -$C_4$-alkylamino oder Di-$C_1$- bis -$C_4$-alkylamino bedeutet, |
| n | für 1 steht und |
| $X^-$ | die in Anspruch 1 angegebene Bedeutung hat, |

durch Kondensation der entsprechenden Anilinderivate mit den entsprechenden Benzaldehyden und anschließende Oxidation mit Sauerstoff in Gegenwart katalytischer Mengen Stickstoffmonoxid, Stickstoffdioxid, Natriumnitrit oder Eisen(III)-nitrat darstellt.

3. Verfahren gemäß Anspruch 1, dadurch gekennzeichnet, daß man Verbindungen der im Anspruch 1 angegebenen allgemeinen Formel, in der

| | |
|---|---|
| $R^1$ und $R^2$ | für Methyl, Ethyl, Propyl, Oxethyl oder Butyl, |
| $R^3$ | für Wasserstoff, Methyl oder Ethyl, |
| $R^4$ | für Wasserstoff, Chlor oder Methyl und |
| n | für 1 stehen und |
| $X^-$ | die in Anspruch 1 genannte Bedeutung hat, |

durch Kondensation entsprechender Anilinderivate mit entsprechenden Benzaldehyden und anschließende Oxidation mit Sauerstoff in Gegenwart katalytischer Mengen Tetrachlor- oder Tetrabrom-1,4-benzochinon und katalytischer Mengen Stickstoffmonoxid und/oder Stickstoffdioxid herstellt.

## Claims

1. One-pot process for the synthesis of triarylmethane dyestuffs of the general formula

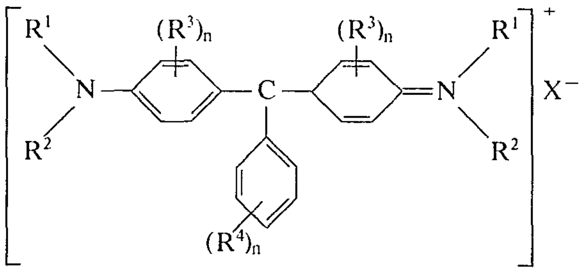

in which

| | |
|---|---|
| $R^1$ and $R^2$ | represent optionally substituted alkyl, aryl or aralkyl or $R^1$ and $R^2$, together or with the ortho-position of the phenyl ring, form a heterocyclic ring and |
| $R^1$ | can additionnally represent hydrogen, |
| $R^3$ and $R^4$ | denote hydrogen or non-ionic substituents, |
| n | represents an integer from 1 to 4 and |
| $X^-$ | denotes an anion, |

characterised in that an aldehyde of the general formula

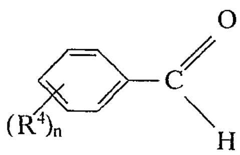

in which $R^4$ and n have the abovementioned meaning,
is subjected to a condensation reaction with aromatic amines of the general formula

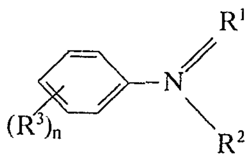

in which $R^1$, $R^2$, $R^3$ and n have the abovementioned meaning,
if appropriate in the presence of urea, and the reaction mixture thus obtained is oxidised with oxygen in the presence of catalytic amounts of benzoquinones substituted by halogen or cyano or of phenanthrenequinones substituted by nitro, and in the presence of catalytic amounts of nitrogen oxides — with the exception of dinitrogen monoxide — or of substances which produce such nitrogen oxides under the reaction conditions.

2. Process according to Claim 1, characterised in that compounds of the general formula indicated in Claim 1, in whisch

| | |
|---|---|
| $R^1$ and $R^2$ | denote $C_1$- to $C_4$-alkyl, hydroxyalkyl with two or three C atoms, cyanoethyl, alkoxyalkyl with a total of three to five C atoms, alkoxycarbonylalkyl with a total of three to eight C atoms, Alkylcarbonyloxyalkyl with a total of three to eight C atoms, $C_1$- to $C_4$-halogenoalkyl, cyclohexyl, benzyl or phenethyl and |
| $R^1$ | can also represent hydrogen, phenyl or phenyl which is substituted by halogen or $C_1$- to $C_4$-alkyl or -alkoxy, |
| $R^3$ | represents hydrogen, $C_1$- to $C_4$-alkyl, $C_1$- to $C_4$-alkoxy, chlorine or bromine, |
| $R^4$ | denotes hydrogen, chlorine, bromine, hydroxyl, $C_1$- to $C_4$-alkyl, $C_1$- to $C_4$-alkoxy, nitro, cyano, mono-$C_1$- to -$C_4$-alkylamino or di-$C_1$- to -$C_4$-alkylamino, |
| n | represents 1 and |
| $X^-$ | has the meaning given in Claim 1, |

are prepared by condensation of the corresponding aniline derivates with the corresponding benzaldehydes and subsequent oxidation of the condensation products with oxygen in the presence of catalytic amounts of nitrogen monoxide, nitrogen dioxide, sodium nitrite or iron-III nitrate.

3. Process according to Claim 1, characterised in that compounds of the general formula indicated in Claim 1, in which

| | |
|---|---|
| $R^1$ and $R^2$ | represent methyl, ethyl, propyl, hydroxyethyl or butyl, |
| $R^3$ | represents hydrogen, methyl or ethyl, |

| | |
|---|---|
| $R^4$ | represents hydrogen, chlorine or methyl, |
| n | represents 1 and |
| $X^-$ | has the meaning given in Claim 1, |

are prepared by condensation of corresponding aniline derivatives with corresponding benzaldehydes and subsequent oxidation of the condensation products with oxygen in the presence of catalytic amounts of tetrachlor- or tetrabromo-1,4-benzoquinone and catalytic amounts of nitrogen monoxide and/or nitrogen dioxide.

## Revendications

1. Procédé en un seul récipient pour la synthèse de colorants de triarylméthane de formule générale:

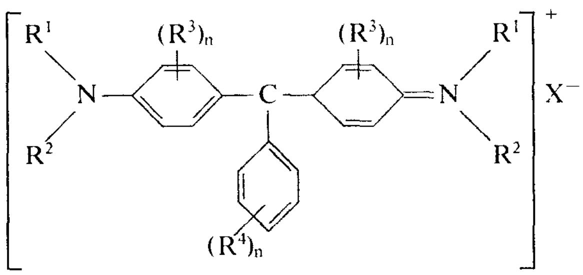

dans laquelle

| | |
|---|---|
| $R^1$ and $R^2$ | représentent un alcoyle, aryle ou aralcoyle éventuellement substitué ou forment ensemble, ou avec la position ortho du noyau phényle, un noyau hétérocyclique, |
| $R^1$ | peut en outre représenter de l'hydrogène, |
| $R^3$ et $R^4$ | représentent de l'hydrogène ou un substituant non ionogène, |
| n | représente un nombre entier de 1 à 4 et |
| $X^-$ | signifie un anion, |

caractérisé en ce qu'on condense une aldéhyde de formule générale:

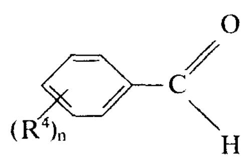

dans laquelle $R^4$ et n ont la signification indiquée plus haut,
avec des amines aromatiques de formule générale:

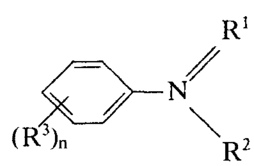

dans laquelle $R^1$, $R^2$, $R^3$ et n ont la signification indiquée plus haut,
éventuellement en présence d'urée et en ce qu'on oxyde le mélange de réaction ainsi obtenu avec de l'oxygène en présence de quantités catalytiques de benzoquinones substituées par de l'halogène ou cyano ou de phénanthrène-quinones nitro-substituées et en présence de quantités catalytiques d'oxydes d'azote — hormis $N_2O$ — ou de substances qui engendrent dans les conditions de la réaction ces oxydes d'azote.

2. Procédé selon la revendication 1, caractérisé en ce qu'on prépare des composés de formule générale indiquée à la revendication 1, dans laquelle

| | |
|---|---|
| $R^1$ et $R^2$ | représentent un alcoyle en $C_1-C_4$, hydroxyalcoyle ayant deux et trois atomes de carbone, cyanoéthyle, alcoxyalcoyle avec en tout trois à cinq atomes de carbone, alcoxycarbonylalcoyle avec en tout trois à huit atomes de carbone, alcoylcarbonyloxyalcoyle avec en tout trois à huit atomes de carbone, haloalcoyle en $C_1-C_4$, cyclohexyle, benzyle ou phénéthyle et |

$R^1$ peut aussi représenter de l'hydrogène, phényle ou phényle substitué par de l'halogène, un alcoyle ou alcoxy en $C_1-C_4$,
$R^3$ représente de l'hydrogène, alcoyle en $C_1-C_4$, alcoxy en $C_1-C_4$, du chlore ou du brome,
$R^4$ signifie de l'hydrogène, du chlore, du brome, hydroxy, alcoyle en $C_1-C_4$, alcoxy en $C_1-C_4$, nitro, cyano, monoalcoyl($C_1-C_4$)amino ou dialcoyl($C_1-C_4$)amino,
n représente 1 et
$X^-$ a la signification indiquée à la revendication 1,

par condensation des dérivés d'aniline correspondants avec les benzaldéhydes correspondantes et oxydation consécutive avec de l'oxygène en présence de quantités catalytiques de monoxyde d'azote, de dioxyde d'azote, de nitrite de sodium ou de nitrate de fer-III.

3. Procédé selon la revendication 1, caractérisé en ce qu'on prépare des composés de formule générale indiquée à la revendication 1, dans laquelle

$R^1$ et $R^2$ représentent unméthyle, éthyle, propyle, oxéthyle ou butyle,
$R^3$ de l'hydrogène, méthyle ou éthyle,
$R^4$ de l'hydrogène, du chlore ou méthyle et
n 1,
$X^-$ ayant la signification indiquée à la revendication 1,

par condensation de dérivés d'aniline correspondants avec les benzaldéhydes correspondantes et oxydation consécutive avec de l'oxygène en présence de quantités catalytiques de tétrachloro- ou tétrabromo-1,4-benzoquinone et de quantités catalytiques de monoxyde d'azote et/ou de dioxyde d'azote.